# EUROPEAN PATENT APPLICATION

(11) **EP 3 228 992 A1**
(43) Date of publication of application: **11.10.2017**
(21) Application number: 15865987.0
(22) Date of filing: 24.11.2015
(51) Int. Cl.: G01D 5/12, G01B 7/00

(54) **STROKE DETECTION DEVICE**

(30) Priority: 05.12.2014 JP 2014246822
(71) Applicant: KYB Corporation, Tokyo 105-6111 (JP)
(72) Inventor: SUGIHARA, Katsumichi, Tokyo 105-6111 (JP)
(74) Representative: Grünecker Patent- und Rechtsanwälte PartG mbB
(86) International application number: PCT/JP2015/082935
(87) International publication number: WO 2016/088605

(57) **Abstract**

A stroke detector 100 includes: a cylinder tube 20; a piston rod 30 configured to advance and retract with respect to the cylinder tube 20; a scale 60 that is formed on the piston rod 30; and a first MR sensor 51 and a second MR sensor 52 that are provided on the cylinder tube 20. The scale 60 has a first edge portion 61a that is opposed to the first MR sensor 51 and a second edge portion 62a that extends at a different angle from that of the first edge portion 61a and that is opposed to the second MR sensor 52.

## Description

### TECHNICAL FIELD

The present invention relates to a stroke detector.

### BACKGROUND ART

Conventionally, stroke detectors are used for detecting the stroke of a linear motion part such as a cylinder. With the stroke detectors, the stroke of the linear motion part is detected by using a detecting element provided on a first member to detect a scale provided on a second member capable of advancing/retracting with respect to the first member. JP2010-145423A discloses a stroke detector that is capable of detecting an absolute stroke amount of a linear motion part by changing the shape of a scale in accordance with a stroke.

### SUMMARY OF INVENTION

In general, with a linear motion part, a second member may be slightly displaced in the direction perpendicular to the advancing/retracting direction with respect to a first member due to a machining error etc. In addition, with a columnar linear motion part as disclosed in JP2010-145423A, the second member may be slightly rotated or distorted with respect to the first member.

When the second member is displaced as described above, because the position of a scale provided on the second member is also displaced, there is a risk in that the stroke amount of the second member cannot be detected by a detecting element with high accuracy. In order to cope with the displacement of the position of the scale, it is conceivable to increase the size of the detecting element. However, the increase in the size of the detecting element will cause the increase in cost and the increase in the size of the linear motion part itself.

An object of the present invention is to suppress a detection error of a stroke of a linear motion part even when displacement of a member on which a scale is provided occurs.

According to one aspect of the present invention, a stroke detector comprising: a first member; a second member configured to advance and retract with respect to the first member; a scale that is formed on a surface of the second member along an advancing/retracting direction of the second member; and a first detecting element and a second detecting element that are provided on the first member so as to oppose to the scale, the first detecting element and the second detecting element being configured to change outputs therefrom in accordance with opposing area of the scale. The scale has a first edge portion that is inclined with respect to the advancing/retracting direction of the second member and a second edge portion that extends at a different angle from that of the first edge portion with respect to the advancing/retracting direction of the second member, the first edge portion is formed so as to always oppose to the first detecting element within an advancing/retracting range of the second member, and the second edge portion is formed so as to always oppose to the second detecting element within the advancing/retracting range of the second member, and a stroke of the second member is detected on the basis of output from the first detecting element and output from the second detecting element.

### BRIEF DESCRIPTION OF DRAWINGS

FIG. 1 is a configuration diagram of a stroke detector according to a first embodiment of the present invention.
FIG. 2 is an enlarged diagram of a scale shown in FIG. 1.
FIG. 3A is a graph of output signals from a first MR sensor of the stroke detector according to the first embodiment of the present invention.
FIG. 3B is a graph of output signals from a second MR sensor of the stroke detector according to the first embodiment of the present invention.
FIG. 3C is a graph in which the output signals from the first MR sensor and the second MR sensor of the stroke detector according to the first embodiment of the present invention are combined.
FIG. 4 is a diagram showing a first modification of the scale shown in FIG. 2.
FIG. 5 is a diagram showing a second modification of the scale shown in FIG. 2.
FIG. 6 is an enlarged diagram of a scale of a stroke detector according to a second embodiment.
FIG. 7A is a graph of output signals from a first MR sensor of the stroke detector according to the second embodiment of the present invention.
FIG. 7B is a graph of output signals from a second MR sensor of the stroke detector according to the second embodiment of the present invention.
FIG. 7C is a graph in which the output signals from the second MR sensor is subtracted from the output signals from the first MR sensor in the stroke detector according to the second embodiment of the present invention.

### DESCRIPTION OF EMBODIMENTS

An embodiment of the present invention will be described below with reference to the drawings.

### <First Embodiment>

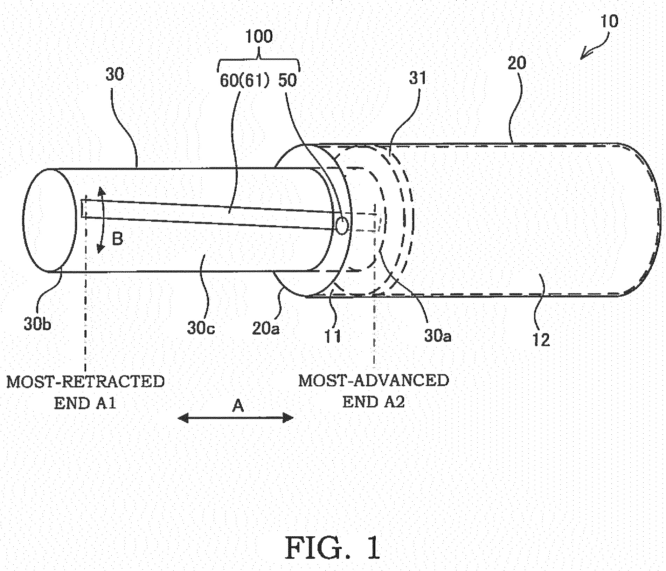

A stroke detector 100 according to a first embodiment of the present invention will be described with reference to FIG. 1. A cylinder 10 shown in FIG. 1 is a hydraulic cylinder that is operated by means of working oil discharged from a hydraulic pump (not shown). The stroke detector 100 is provided on this cylinder 10.

The cylinder 10 includes a cylinder tube 20 that is a main body of the cylinder 10 and that serves as a first member and a piston rod 30 that is provided so as to be capable of advancing/retracting with respect to the cylinder tube 20 and that serves as a second member. In other words, the cylinder 10 is a linear motion part in which the piston rod 30, serving as the one member, moves in an advancing/retracting manner with respect to the cylinder tube 20 serving as the other member.

The cylinder tube 20 has a cylindrical shape, and a piston 31 is provided in the cylinder tube 20 so as to be freely slidable in the axial direction. In addition, at an end portion of the cylinder tube 20, a cylinder head 20a through which the piston rod 30 is inserted in a freely slidable manner is provided. The interior of the cylinder tube 20 is divided into two oil chambers 11 and 12 by the piston 31.

The two oil chambers 11 and 12 are connected to the hydraulic pump which serves as a hydraulic pressure source (not shown) or a tank (not shown) via a switching valve (not shown). When one of the two oil chambers 11 and 12 is connected to the hydraulic pump, the other is connected to the tank. As the working oil is guided from the hydraulic pump to either one of the two oil chambers 11 and 12 and the piston rod 30 is moved in the axial direction, the cylinder 10 is extended/contracted. Although the cylinder 10 is a double-acting cylinder, it may be a single-acting cylinder. In addition, the cylinder 10 is not limited to a hydraulic cylinder, and an pneumatic cylinder, a water pressure cylinder, an electrical mechanical cylinder, or the like may also be used.

The piston rod 30 is a columnar magnetic member, a proximal end portion 30a of which is fixed to the piston 31, and a distal end portion 30b thereof is exposed from the cylinder tube 20. The piston rod 30 is operated by hydraulic force acting on the piston 31.

Next, the stroke detector 100 provided on the cylinder 10 will be described.

The stroke detector 100 includes MR sensors 50 that serve as detecting elements disposed on the cylinder head 20a through which the piston rod 30 is inserted and scales 60 that are formed on a side surface 30c of the piston rod 30 along the advancing/retracting direction A (the direction of an arrow A in FIG. 1) of the piston rod 30. The stroke detector 100 is provided so as to detect a stroke amount and a stroke position of the piston rod 30 with respect to the cylinder tube 20.

MR (Magneto-Resistive) sensors 50 have MR elements in which electrical resistance changes in accordance with the intensity of magnetism. The MR sensors 50 are disposed on the inner circumferential side of the cylinder head 20a so as to oppose to the outer circumference of the piston rod 30. Permanent magnets (not shown) serving as magnetism generators are respectively disposed on the another sides of the surfaces of the MR sensors 50 opposing to the piston rod 30.

The MR sensors 50 detect the magnetism generated by the permanent magnets and output voltage corresponding to the detected magnetism to a controller (not shown). The magnetism generated by the permanent magnets only acts on a magnetic body and does not act on a non-magnetic body. In other words, the MR sensors 50 detect how the magnetism generated by the permanent magnets is changed by the magnetism of a member opposed to the MR sensors 50.

Instead of using the MR sensors 50, a GMR (Giant Magneto-Resistive) sensor having a higher sensitivity, an MI sensor utilizing an MI (Magneto-Impedance) effect, or the like may also be used. In addition, a coil may be provided so as to oppose to the scale 60, and a displacement of the piston rod 30 may be detected by magnetizing this coil. In this case, the impedance of the magnetized coil changes in accordance with the opposing scale 60.

The scales 60 are non-magnetic bodies that are formed on the outer circumference of the piston rod 30, which is a magnetic body. Although only one of the scales 60 is shown in FIG. 1, two scales 60 are provided at two locations on the piston rod 30 separated in the circumferential direction B (in the direction of the arrow B in FIG. 1). The scales 60 are formed by melting the outer circumferential surface of the piston rod 30 with a laser beam radiated by a laser device as a local heating device and by austenitizing the outer circumferential surface by doping Ni or Mn thereto.

The piston rod 30 may be formed of a non-magnetic body, and in this case, the scales 60 are formed as magnetic bodies by melting the piston rod 30 by a laser device and by doping Sn etc. Means to perform local heating is not limited to the use of a laser beam, and any means capable of performing local heating, such as use of electron beam, high frequency induction heating, arc discharge, and so forth, may also be used.

The scales 60 are formed over the entirety of the stroke that includes most-retracted ends A1 that oppose to the MR sensors 50 when the piston rod 30 has retracted into the cylinder tube 20 to the utmost extent and most-advanced ends A2 that oppose to the MR sensors 50 when the piston rod 30 has advanced from the cylinder tube 20 to the utmost extent.

With the stroke detector 100 having the above-described configuration, the magnetism that is generated by the permanent magnets and that acts on the piston rod 30 changes in accordance with the areas of the scales 60 opposed to the MR sensors 50 and with the distances between the MR sensors 50 and the scales 60. In this embodiment, as described below, the areas of the scales 60 opposed to the MR sensors 50 change in accordance with the stroke of the piston rod 30. Therefore, the stroke detector 100 can detect, on the basis of the output from the MR sensors 50, the absolute stroke amount of the piston rod 30, in other words, the absolute position of the piston rod 30.

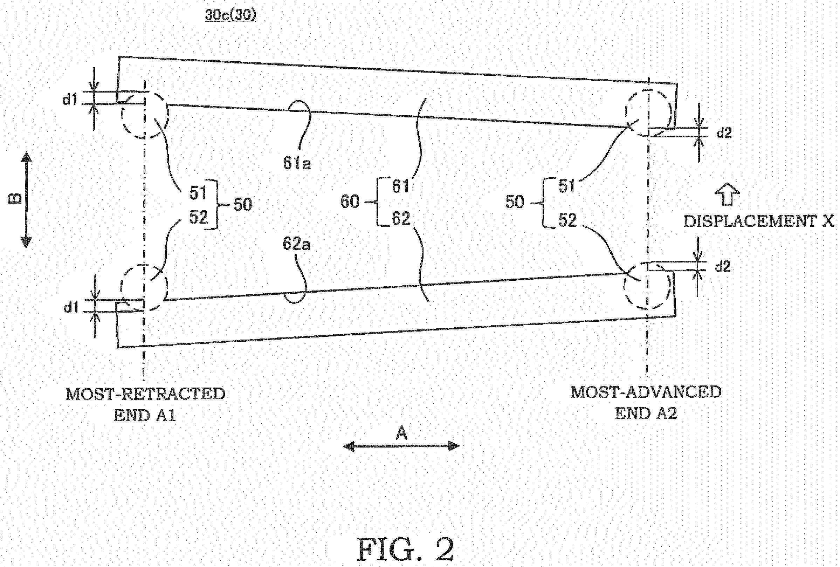

Next, the scales 60 will be described in detail with reference to FIG. 2. FIG. 2 shows the scales 60 shown in FIG. 1 in a manner exploded in the circumferential direction B of the piston rod 30.

The scales 60 have a first scale 61 and a second scale 62 that is provided so as to be separated from the first scale 61 in the circumferential direction B of the piston rod 30. The first scale 61 and the second scale 62 are respectively formed to have rectangular shapes and are provided such that their long sides are slightly inclined with respect to the advancing/retracting direction A of the piston rod 30.

The first scale 61 has a first edge portion 61a that is a long side inclined with respect to the advancing/retracting direction A of the piston rod 30 and that forms a boundary between a non-magnetic portion and a magnetic portion. The second scale 62 has a second edge portion 62a that is a long side inclined with respect to the advancing/retracting direction A of the piston rod 30 in the direction opposite from that of the first edge portion 61a and that forms a boundary between a non-magnetic portion and a magnetic portion. The shapes of the first scale 61 and the second scale 62 are not limited to the rectangular shapes, and the first scale 61 and the second scale 62 may have triangular shapes or trapezoidal shapes, as long as the edge portions 61a and 62a are respectively formed so as to be inclined in the directions opposite to each other with respect to the advancing/retracting direction A of the piston rod 30. When the respective scales 61 and 62 are formed to have the rectangular shapes, because there is no acute angle, it is possible to form the scales 61 and 62 relatively easily.

The MR sensors 50 have a first MR sensor 51 serving as a first detecting element that opposes to the first scale 61 and a second MR sensor 52 serving as a second detecting element that opposes to the second scale 62. The first MR sensor 51 and the second MR sensor 52 are provided in a separated manner on the same place perpendicular to the advancing/retracting direction A of the piston rod 30. Therefore, the first MR sensor 51 and the second MR sensor 52 are affected by the displacement of the piston rod 30 in the direction perpendicular to the advancing/retracting direction A, caused at the same positions in the advancing/retracting direction A.

As shown in FIG. 2, the first edge portion 61a is formed so as to always oppose to the first MR sensor 51 within a range from the most-retracted end A1, at which the piston rod 30 has retracted into the cylinder tube 20 to the utmost extent, to the most-advanced end A2, at which the piston rod 30 has advanced from the cylinder tube 20 to the utmost extent. Similarly, the second edge portion 62a is formed so as to always oppose to the second MR sensor 52 within the same range.

The area of the first scale 61 opposed to the first MR sensor 51 and the area of the second scale 62 opposed to the second MR sensor 52 are minimized at the most-retracted end A1 and maximized at the most-advanced end A2. In other words, as the piston rod 30 is moved in the direction in which the piston rod 30 advances from the cylinder tube 20, the area of the first scale 61 opposed to the first MR sensor 51 and the area of the second scale 62 opposed to the second MR sensor 52 are gradually increased.

Specifically, the positional relationship between the first MR sensor 51 and the first scale 61 when the piston rod 30 is coaxially moved relative to the cylinder tube 20 is set such that a state in which the first MR sensor 51 opposes to the first scale 61 only over a first distance d1 in the circumferential direction B at the most-retracted end A1 is achieved and such that a state in which the first MR sensor 51 does not oppose to the first scale 61 only over a second distance d2 in the circumferential direction B at the most-advanced end A2 is achieved.

The first distance d1 and the second distance d2 are set so as to be greater than the possible displacement amount of the piston rod 30 in the circumferential direction B with respect to the cylinder tube 20 due to a machining error etc. Therefore, even when the piston rod 30 is slightly displaced in the circumferential direction B, the state in which the first edge portion 61a opposes to the first MR sensor 51 is maintained, and the output from the first MR sensor 51 continues to change in accordance with the stroke of the piston rod 30.

The first distance d1 and the second distance d2 may be the same or different from each other. In addition, in order to improve the detection precision of the stroke, it is preferable that the first distance d1 and the second distance d2 be set as short as possible such that the change in the output from the first MR sensor 51 with respect to a predetermined stroke becomes larger. The positional relationship between the second MR sensor 52 and the second scale 62 is also set in a similar manner.

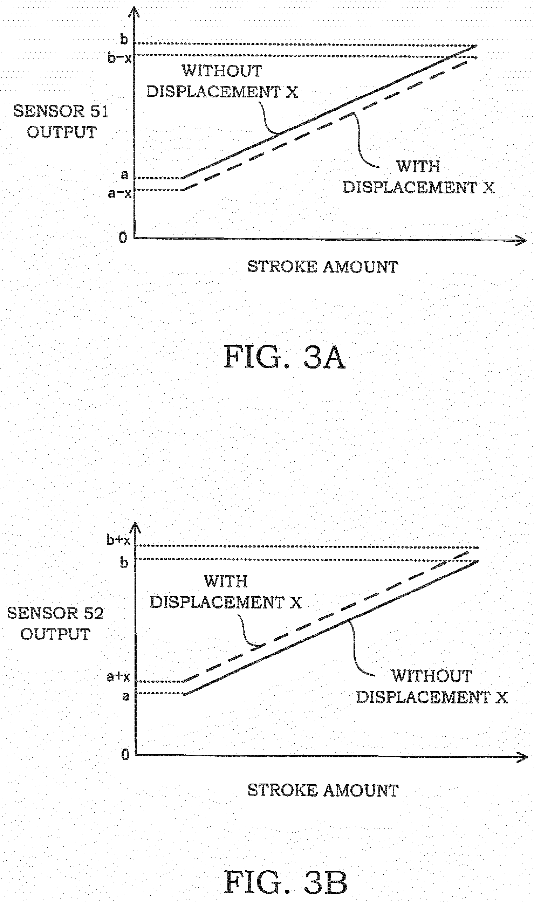

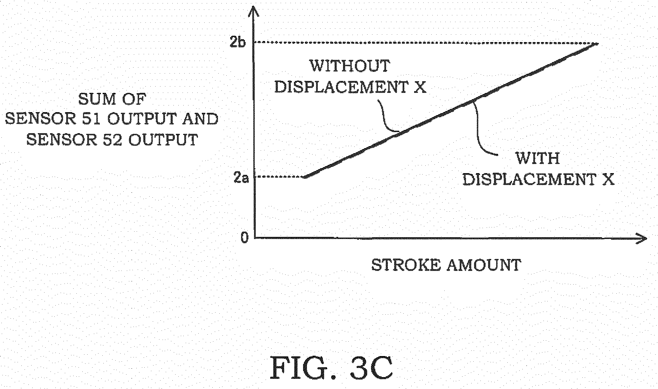

Next, the detection of the stroke of the piston rod 30 by the stroke detector 100 will be described with reference to FIGs. 2 and 3. FIG. 3A is a graph showing an output waveform of the first MR sensor 51 that changes in accordance with the stroke of the piston rod 30. FIG. 3B is a graph showing an output waveform of the second MR sensor 52 that changes in accordance with the stroke of the piston rod 30. FIG. 3C is a graph showing an waveform in which the output from the first MR sensor 51 and the output from the second MR sensor 52, which change in accordance with the stroke of the piston rod 30, are combined. In FIGs. 3A to 3C, the solid lines show the outputs in a case in which the piston rod 30 is not displaced with respect to the cylinder tube 20 in the direction of the arrow shown in FIG. 2, and the broken lines show the outputs in a case in which the piston rod 30 is displaced with respect to the cylinder tube 20 in the direction of the arrow shown in FIG. 2.

Here, a case where a state in which the piston rod 30 has retracted into the cylinder tube 20 to the utmost extent is shifted to a state in which the piston rod 30 has advanced from the cylinder tube 20 to the utmost extent will be described. In a case where the piston rod 30 retracts into the cylinder tube 20 from the state in which the piston rod 30 has advanced, an operation reversed from that described below is performed.

When a switching valve is switched and the working oil discharged from the hydraulic pump is supplied to the oil chamber 12, the working oil present in the oil chamber 11 is discharged to the tank. Thereby, the internal pressure in the oil chamber 12 is increased, and the internal pressure in the oil chamber 11 is relatively reduced. Thus, the piston 31 positioned between the oil chambers 11 and 12 moves in the direction in which the oil chamber 11 is contracted. Together with the movement of the piston 31, the piston rod 30 that is integrated with the piston 31 starts to advance from the cylinder tube 20.

As the piston rod 30 starts to advance from the cylinder tube 20, the first MR sensor 51 detects the change in the magnetism due to the change in the opposing area of the first scale 61. The area of the first scale 61 that opposes to the first MR sensor 51 is increased as the piston rod 30 advances. In other words, as the piston rod 30 advances, the proportion of the non-magnetic body occupying the portion opposing to the first MR sensor 51 is gradually increased. As described above, as the occupying proportion of the non-magnetic body is increased, the change in the magnetism is also increased. As a result, as shown with the solid line in the graph of FIG. 3A, the output from the first MR sensor 51 changes from an output a to an output b as the piston rod 30 advances from the cylinder tube 20.

Similarly, as shown with the solid line in the graph of FIG. 3B, the output from the second MR sensor 52 also changes from the output a to the output b as the piston rod 30 advances from the cylinder tube 20.

As shown with the solid line in the graph of FIG. 3C, the value obtained by combining the output from the first MR sensor 51 with the output from the second MR sensor 52 changes from an output 2a to an output 2b in accordance with the stroke amount of the piston rod 30. Therefore, on the basis of the sum of the output from the first MR sensor 51 and the output from the second MR sensor 52, it is possible to detect the absolute stroke amount and the stroke position of the piston rod 30.

Next, a case where the piston rod 30 is slightly rotated by a displacement X with respect to the cylinder tube 20 in the direction of the arrow shown in FIG. 2 will be described.

When the piston rod 30 is rotated in the direction of the arrow shown in FIG. 2, the first scale 61 is moved in the direction in which the first scale 61 moves away from the first MR sensor 51 in the circumferential direction B. In other words, the area of the first scale 61 opposed to the first MR sensor 51 is reduced compared with a case where the piston rod 30 is not displaced in the circumferential direction B. Therefore, as shown with the broken line in the graph of FIG. 3A, compared with a case where the piston rod 30 is not displaced in the circumferential direction B, the output from the first MR sensor 51 is slightly decreased by an amount (x) corresponding to the displacement X.

On the other hand, as the piston rod 30 is rotated in the direction of the arrow shown in FIG. 2, the second scale 62 is moved in the direction in which the second scale 62 approaches the second MR sensor 52 in the circumferential direction B. In other words, the area of the second scale 62 opposed to the second MR sensor 52 is increased compared with a case where the piston rod 30 is not displaced in the circumferential direction B. Therefore, as shown with the broken line in the graph of FIG. 3B, compared with a case where the piston rod 30 is not displaced in the circumferential direction B, the output from the second MR sensor 52 is slightly increased by an amount (x) corresponding to the displacement X.

Here, because the first scale 61 and the second scale 62 are both formed on the side surface 30c of the piston rod 30, when the piston rod 30 is displaced in the circumferential direction B, the displaced distances of the first scale 61 and the second scale 62 in the circumferential direction B are naturally the same. In other words, the displaced distance of the first scale 61 in the circumferential direction B with respect to the first MR sensor 51 is the same as the displaced distance of the second scale 62 in the circumferential direction B with respect to the second MR sensor 52. Therefore, the decreased amount (x) of the output from the first MR sensor 51 and the increased amount (x) of the output from the second MR sensor 52, both of which have changed in accordance with the displacement X of the piston rod 30, are substantially the same.

Therefore, by combining the output from the first MR sensor 51 and the output from the second MR sensor 52, the decreased amount (x) of the output from the first MR sensor 51 and the increased amount (x) of the output from the second MR sensor 52 are cancelled out. As a result, as shown with the broken line in the graph of FIG. 3C, it is possible to obtain the same output as that in a case where the piston rod 30 is not displaced in the circumferential direction B. Even when the piston rod 30 is slightly rotated in the opposite direction from the direction of the arrow shown in FIG. 2, it is possible to obtain the same output as that in a case where the piston rod 30 is not displaced in the circumferential direction B in a similar manner. In addition, even when the piston rod 30 is displaced in the circumferential direction B at an intermediate position of the stroke or the displacement amount of the piston rod 30 is changed at an intermediate position of the stroke, it is possible to obtain the same output as that in a case where the piston rod 30 is not displaced in the circumferential direction B in a similar manner.

As described above, with the stroke detector 100 in this embodiment, even when the piston rod 30 is displaced in the circumferential direction B, on the basis of the sum of the output from the first MR sensor 51 and the output from the second MR sensor 52, the output corresponding to the stroke amount of the piston rod 30 is calculated. Therefore, the detection error for the stroke of the piston rod 30 is suppressed, and it is possible to precisely detect the absolute stroke amount and the stroke position.

The area of the first scale 61 opposed to the first MR sensor 51 and the area of the second scale 62 opposed to the second MR sensor 52 may be set so as to be maximized at the most-retracted end A1 and minimized at the most-advanced end A2. When the advancing/retracting direction of the piston rod 30 with which the area of the first scale 61 opposed to the first MR sensor 51 is gradually increased and the advancing/retracting direction of the piston rod 30 with which the area of the second scale 62 opposed to the second MR sensor 52 is gradually increased are the same direction, the stroke of the piston rod 30 can be detected as described above.

In addition, the inclined angle of the first edge portion 61a relative to the advancing/retracting direction A of the piston rod 30 and the inclined angle of the second edge portion 62a relative to the advancing/retracting direction A of the piston rod 30 may be the same or different. In addition, only one of the edge portions 61a and 62a needs to be inclined relative to the advancing/retracting direction A of the piston rod 30, and the other of the edge portions 61a and 62a may not be inclined relative to the advancing/retracting direction A of the piston rod 30. As long as either one of the edge portions 61a and 62a is inclined relative to the advancing/retracting direction A of the piston rod 30, the detection error can be suppressed and the stroke of the piston rod 30 can be detected as described above.

In addition, although one scale each is provided as each of the scales 61 and 62, a plurality of scales may be provided as each of the scales 61 and 62, and then, a plurality of MR sensors 51 and 52 may respectively be provided in a corresponding manner. With such a configuration, by calculating the average value for the outputs from the respective MR sensors 51 and 52, it is possible to further suppress the detection error for the stroke. At this time, by performing a setting such that the areas of a pair of scales 61 and 62 opposing to a pair of MR sensors 51 and 52 become different from the areas of another pair of scales 61 and 62 opposing to another pair of MR sensors 51 and 52, it is possible to detect the absolute stroke amount by either of the pairs of MR sensors 51 and 52 even when the displacement of the piston rod 30 in the direction perpendicular to the advancing/ retracting direction is increased.

In addition, although it suffices to arrange the first scale 61 and the second scale 62 so as to be separated in the circumferential direction B of the piston rod 30, it is preferred that the first scale 61 and the second scale 62 be provided so as to oppose to each other with respect to the center axis of the piston rod 30. With such a configuration, it is possible to detect the absolute stroke amount even in a state in which the piston rod 30 is displaced with respect to the cylinder tube 20 in the radial direction, in other words, in a state in which the stroke is performed in a decentered state.

Specifically, for example, when the piston rod 30 is decentered in the direction in which the first scale 61 approaches the first MR sensor 51, the second scale 62 moves away from the second MR sensor 52. Therefore, in accordance with the amount of decentering, one of the output from the first MR sensor 51 and the output from the second MR sensor 52 is increased and the other is decreased or vice versa. Thus, as in the case in which the piston rod 30 is displaced in the circumferential direction B, by combining the output from the first MR sensor 51 and the output from the second MR sensor 52, the changes in the outputs from the respective MR sensors 51 and 52 corresponding to the amount of decentering are cancelled out.

According to the above-mentioned first embodiment, the advantages described below are afforded.

In accordance with the displacement of the piston rod 30 in the direction perpendicular to the advancing/retracting direction A, one of the outputs from the first MR sensor 51 and the second MR sensor 52 that are used for detection of the stroke of the piston rod 30 is increased and the other is decreased or vice versa. Therefore, by combining the output from the first MR sensor 51 and the output from the second MR sensor 52, the changes in the outputs in accordance with the displacement X are cancelled out. As a result, even when the piston rod 30 on which the scales 60 are provided is displaced, it is possible to suppress the detection error for the stroke of the piston rod 30.

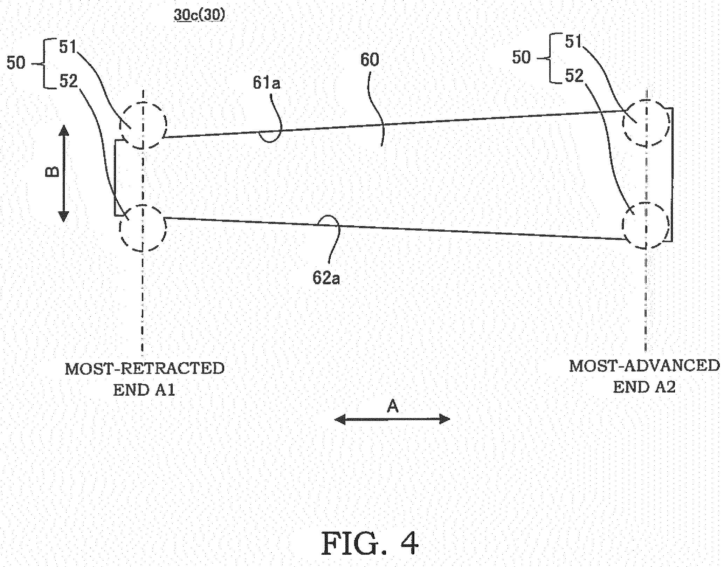

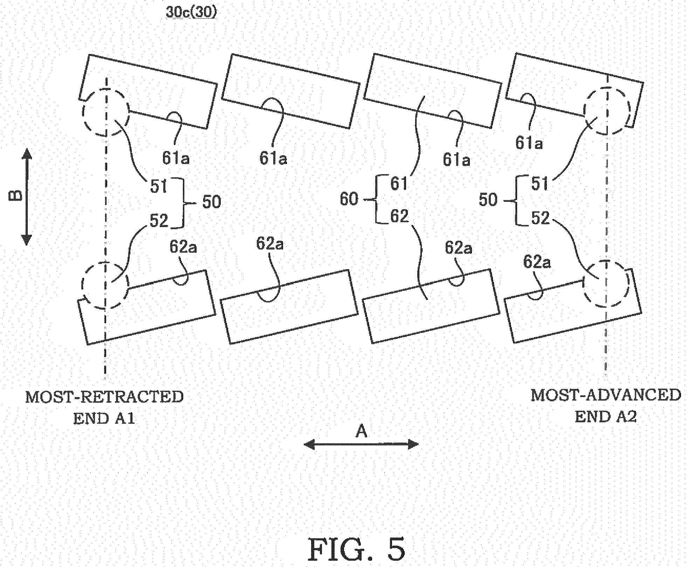

Next, a modification of the stroke detector 100 according to the first embodiment of the present invention will be described with reference to FIGs. 4 and 5. FIGs. 4 and 5 show the scales 60 in a manner exploded in the circumferential direction B of the piston rod 30.

In the above-mentioned first embodiment, the scales 60 have the first scale 61 having the first edge portion 61a and the second scale 62 having the second edge portion 62a. Instead of this configuration, as in a first modification shown in FIG. 4, it is possible to employ a configuration in which the first edge portion 61a and the second edge portion 62a are provided on a single scale 60. In this case, because the scale 60 is formed of a single scale, the processing of the scale becomes easier. In addition, because it is possible to narrow a gap between the first edge portion 61a and the second edge portion 62a, it is possible to compactly dispose the first MR sensor 51 and the second MR sensor 52 that are arranged so as to oppose thereto.

In addition, in the above-mentioned first embodiment, each of the first scale 61 and the second scale 62 is formed as a stripe along the advancing/retracting direction A of the piston rod 30. Instead of this configuration, as in a second modification shown in FIG. 5, each of the first scale 61 and the second scale 62 may be formed along the advancing/retracting direction A of the piston rod 30 by being divided into a plurality of parts. When each of the scales 61 and 62 is formed as a stripe, there is a risk that, especially when the stroke is relatively long, the changes in the outputs from the respective MR sensors 51 and 52 become gradual and the detection precision of the stroke is deteriorated. In contrast, when each of the scales 61 and 62 is formed along the advancing/retracting direction A by being divided into a plurality of parts, it is possible to increase the changes in the outputs from the respective MR sensors 51 and 52 for a predetermined stroke. In addition, by changing the lengths of the respective scales 61 and 62 that are divided into a plurality of parts in the advancing/retracting direction A, in other words, by changing a number of divisions of the first scale 61 and a number of divisions of the second scale 62, it is possible to detect the absolute position of the stroke even when the stroke is relatively long.

### <Second Embodiment>

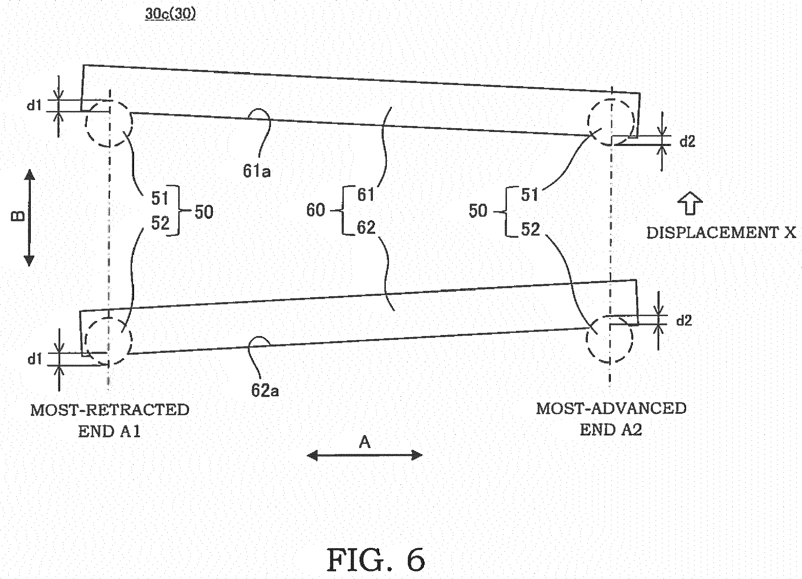

Next, the stroke detector 100 according to a second embodiment of the present invention will be described with reference to FIG. 6. FIG. 6 shows the scales 60 shown in FIG. 1 in a manner exploded in the circumferential direction B of the piston rod 30. In the following, differences from the first embodiment will be mainly described, and components that are the same as those in the first embodiment are assigned the same reference numerals and descriptions thereof will be omitted.

In the first embodiment, the area of the first scale 61 opposed to the first MR sensor 51 and the area of the second scale 62 opposed to the second MR sensor 52 are minimized at the most-retracted end A1 and maximized at the most-advanced end A2. In contrast, in the second embodiment, while the area of the first scale 61 opposed to the first MR sensor 51 is minimized at the most-retracted end A1 and maximized at the most-advanced end A2, the area of the second scale 62 opposed to the second MR sensor 52 is maximized at the most-retracted end A1 and minimized at the most-advanced end A2. In other words, as the piston rod 30 is moved in the direction in which the piston rod 30 advances from the cylinder tube 20, while the area of the first scale 61 opposed to the first MR sensor 51 is gradually increased, the area of the second scale 62 opposed to the second MR sensor 52 is gradually reduced.

Specifically, the positional relationship between the first MR sensor 51 and the first scale 61 when the piston rod 30 is coaxially moved relative to the cylinder tube 20 is set such that a state in which the first MR sensor 51 opposes to the first scale 61 only over the first distance d1 in the circumferential direction B at the most-retracted end A1 is achieved and such that a state in which the first MR sensor 51 does not oppose to the first scale 61 only over a second distance d2 in the circumferential direction B at the most-advanced end A2 is achieved. On the other hand, the positional relationship between the second MR sensor 52 and the second scale 62 is set such that a state in which the second MR sensor 52 does not oppose to the second scale 62 only over the first distance d1 in the circumferential direction B at the most-retracted end A1 is achieved and such that a state in which the second MR sensor 52 opposes to the second scale 62 only over the second distance d2 in the circumferential direction B at the most-advanced end A2 is achieved.

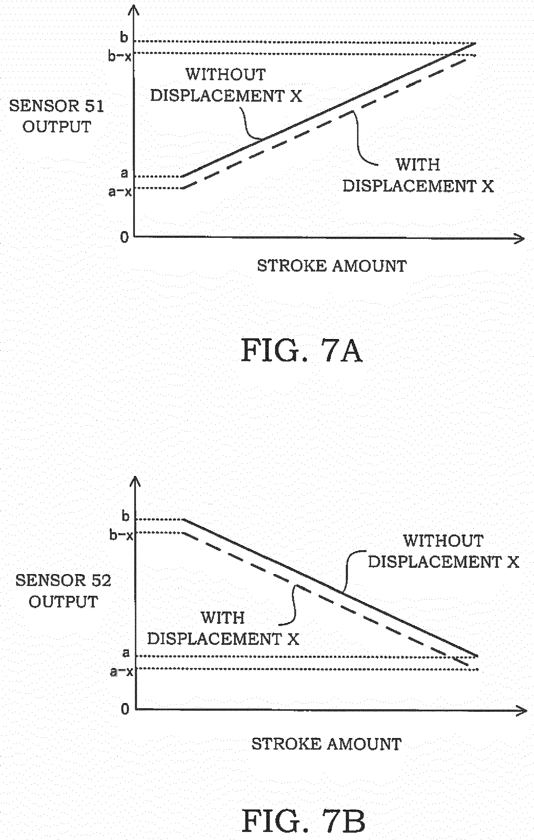

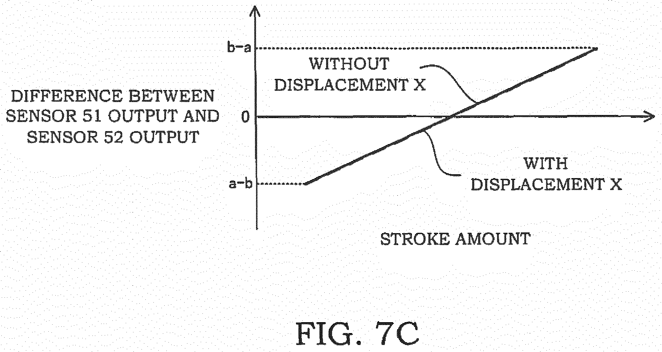

Next, the detection of the stroke by the stroke detector 100 according to the second embodiment will be described with reference to FIGs. 6 and 7. FIG. 7A is a graph showing an output waveform of the first MR sensor 51 that changes in accordance with the stroke of the piston rod 30. FIG. 7B is a graph showing an output waveform of the second MR sensor 52 that changes in accordance with the stroke of the piston rod 30. FIG. 7C is a graph showing an waveform in which the output from the second MR sensor 52 that changes in accordance with the stroke of the piston rod 30 is subtracted from the output from the first MR sensor 51 that changes in accordance with the stroke of the piston rod 30. In FIGs. 7A to 7C, the solid lines show the outputs in a case in which the piston rod 30 is not displaced with respect to the cylinder tube 20 in the direction of the arrow shown in FIG. 6, and the broken lines show the outputs in a case in which the piston rod 30 is displaced with respect to the cylinder tube 20 in the direction of the arrow shown in FIG. 6.

Here, a case where a state in which the piston rod 30 has retracted into the cylinder tube 20 to the utmost extent is shifted to a state in which the piston rod 30 has advanced from the cylinder tube 20 to the utmost extent will be described. In a case where the piston rod 30 retracts into the cylinder tube 20 from the state in which the piston rod 30 has advanced, an operation reversed from that described below is performed.

As the internal pressure in the oil chamber 12 is increased and the piston rod 30 starts to advance from the cylinder tube 20, the first MR sensor 51 detects the change in the magnetism due to the change in the opposing area of the first scale 61. The area of the first scale 61 that opposes to the first MR sensor 51 is increased as the piston rod 30 advances. In other words, as the piston rod 30 advances, the proportion of the non-magnetic body occupying the portion opposing to the first MR sensor 51 is gradually increased. As described above, as the occupying proportion of the non-magnetic body is increased, the change in the magnetism is also increased. As a result, as shown with the solid line in the graph of FIG. 7A, the output from the first MR sensor 51 changes from the output a to the output b as the piston rod 30 advances from the cylinder tube 20.

On the other hand, the area of the second scale 62 that opposes to the second MR sensor 52 is reduced as the piston rod 30 advances. In other words, as the piston rod 30 advances, the proportion of the non-magnetic body occupying the portion opposing to the second MR sensor 52 is gradually reduced. As described above, as the occupying proportion of the non-magnetic body is decreased, the change in the magnetism is also decreased. As a result, as shown with the solid line in the graph of FIG. 7B, the output from the second MR sensor 52 changes from the output b to the output a as the piston rod 30 advances from the cylinder tube 20.

As shown with the solid line in the graph of FIG. 7C, the value obtained by subtracting the output from the second MR sensor 52 from the output from the first MR sensor 51 changes from an output (a-b) to an output (b-a) in accordance with the stroke amount of the piston rod 30. Therefore, on the basis of the difference between the output from the first MR sensor 51 and the output from the second MR sensor 52, it is possible to detect the absolute stroke amount and the stroke position of the piston rod 30.

Next, a case where the piston rod 30 is slightly rotated only by the displacement X relative to the cylinder tube 20 in the direction of the arrow shown in FIG. 6 will be described.

When the piston rod 30 is rotated in the direction of the arrow shown in FIG. 6, the first scale 61 is moved in the direction in which the first scale 61 moves away from the first MR sensor 51 in the circumferential direction B. In other words, the area of the first scale 61 opposed to the first MR sensor 51 is reduced compared with a case where the piston rod 30 is not displaced in the circumferential direction B. Therefore, as shown with the broken line in the graph of FIG. 7A, compared with a case where the piston rod 30 is not displaced in the circumferential direction B, the output from the first MR sensor 51 is slightly decreased by an amount (x) corresponding to the displacement X.

Similarly, as the piston rod 30 is rotated in the direction of the arrow shown in FIG. 6, the second scale 62 is moved in the direction in which the second scale 62 moves away from the second MR sensor 52 in the circumferential direction B. In other words, the area of the second scale 62 opposed to the second MR sensor 52 is reduced compared with a case where the piston rod 30 is not displaced in the circumferential direction B. Therefore, as shown with the broken line in the graph of FIG. 7B, compared with a case where the piston rod 30 is not displaced in the circumferential direction B, the output from the second MR sensor 52 is slightly decreased by an amount (x) corresponding to the displacement X.

Here, the displaced distance of the first scale 61 in the circumferential direction B with respect to the first MR sensor 51 is the same as the displaced distance of the second scale 62 in the circumferential direction B with respect to the second MR sensor 52. Therefore, the decreased amount (x) of the output from the first MR sensor 51 and the decreased amount (x) of the output from the second MR sensor 52, both of which have been changed in accordance with the displacement X of the piston rod 30, are substantially the same.

Therefore, by subtracting the output from the second MR sensor 52 from the output from the first MR sensor 51, the decreased amount (x) of the output from the first MR sensor 51 and the decreased amount (x) of the output from the second MR sensor 52 are cancelled out each other. As a result, as shown with the broken line in the graph of FIG. 7C, it is possible to obtain the same output as that in a case where the piston rod 30 is not displaced in the circumferential direction B. Even when the piston rod 30 is slightly rotated in the opposite direction from the direction of the arrow shown in FIG. 6, it is possible to obtain the same output as that in a case where the piston rod 30 is not displaced in the circumferential direction B in a similar manner.

As described above, with the stroke detector 100 in the second embodiment, even when the piston rod 30 is displaced in the circumferential direction B, on the basis of the difference between the output from the first MR sensor 51 and the output from the second MR sensor 52, the output corresponding to the stroke amount of the piston rod 30 is calculated. Therefore, the detection error for the stroke of the piston rod 30 is suppressed, and it is possible to precisely detect the absolute stroke amount and the stroke position.

While the area of the first scale 61 opposed to the first MR sensor 51 may be set so as to be maximized at the most-retracted end A1 and minimized at the most-advanced end A2, the area of the second scale 62 opposed to the second MR sensor 52 may be set so as to be minimized at the most-retracted end A1 and maximized at the most-advanced end A2. When the advancing/ retracting direction of the piston rod 30 with which the area of the first scale 61 opposed to the first MR sensor 51 is gradually increased and the advancing/retracting direction of the piston rod 30 with which the area of the second scale 62 opposed to the second MR sensor 52 is gradually increased are the opposite directions, the stroke of the piston rod 30 can be detected as described above.

In addition, with the stroke detector 100, there is a case in which a risk in that a drift is caused to the outputs from the respective MR sensors 51 and 52 by the changes in the resistance values in the respective MR sensors 51 and 52 due to the effect of the ambient temperature. In the second embodiment, as described above, by subtracting the output from the second MR sensor 52 from the output from the first MR sensor 51, the stroke amount and the stroke position of the piston rod 30 are detected. Therefore, even when a drift is caused to the outputs from the respective MR sensors 51 and 52 due to the effect of temperature, the changes in the outputs from the respective MR sensors 51 and 52 in accordance with the drift are cancelled out. As a result, it is possible to suppress the detection error due to the ambient temperature and to precisely detect the absolute stroke amount and the stroke position.

In addition, although it suffices to arrange the first scale 61 and the second scale 62 so as to be separated in the circumferential direction B of the piston rod 30, the first scale 61 and the second scale 62 are provided within a range of less than 90 degrees, more preferably, within a range of less than 30 degrees in the circumferential direction B of the piston rod 30. As described above, by arranging the first scale 61 and the second scale 62 so as to be adjacent to each other, it is possible to detect the absolute stroke amount by reducing the effect of the decentering even in a state in which the piston rod 30 is displaced with respect to the cylinder tube 20 in the radial direction, in other words, in a case in which the stroke is performed in a decentered state.

Specifically, for example , when the piston rod 30 is decentered in the direction in which the first scale 61 approaches the first MR sensor 51, the second scale 62 also approaches the second MR sensor 52. Therefore, the output from the first MR sensor 51 and the output from the second MR sensor 52 are increased or decreased in accordance with the amount of decentering of the piston rod 30 in a similar manner. Thus, as in the case in which the piston rod 30 is displaced in the circumferential direction B, by subtracting the output from the second MR sensor 52 from the output from the first MR sensor 51, the changes in the outputs from the respective MR sensors 51 and 52 corresponding to the amount of decentering are cancelled out.

According to the above-mentioned second embodiment, the advantages described below are afforded.

The outputs from the first MR sensor 51 and the second MR sensor 52 that are used for detection of the stroke of the piston rod 30 are increased or decreased in a similar manner in accordance with the displacement of the piston rod 30 in the direction perpendicular to the advancing/retracting direction A. Therefore, by subtracting the output from the second MR sensor 52 from the output from the first MR sensor 51, the changes in the outputs in accordance with the displacement X are cancelled out. As a result, even when the piston rod 30 on which the scales 60 are provided is displaced, it is possible to suppress the detection error for the stroke of the piston rod 30.

The configurations, operations, and effects of the embodiments according to the present invention will be collectively described below.

The stroke detector 100 includes: the cylinder tube 20; the piston rod 30 that is provided so as to be capable of advancing/retracting with respect to the cylinder tube 20; the scales 60 that are formed on the side surface 30c of the piston rod 30 along the advancing/retracting direction A of the piston rod 30; and the first MR sensor 51 and the second MR sensor 52 that are provided on the cylinder tube 20 so as to oppose to the scales 60 and that change the outputs therefrom in accordance with the opposing areas of the scales 60. The scales 60 have the first edge portion 61a that is inclined with respect to the advancing/ retracting direction A of the piston rod 30 and the second edge portion 62a that extends at a different angle from that of the first edge portion 61a with respect to the advancing/retracting direction A of the piston rod 30. The first edge portion 61a is formed so as to always oppose to the first MR sensor 51 within an advancing/retracting range of the piston rod 30, and the second edge portion 62a is formed so as to always oppose to the second MR sensor 52 within the advancing/retracting range of the piston rod 30. The stroke of the piston rod 30 is detected on the basis of the output from the first MR sensor 51 and the output from the second MR sensor 52.

With this configuration, the outputs from the first MR sensor 51 and the second MR sensor 52 that are used for detection of the stroke of the piston rod 30 respectively change in accordance with the displacement of the piston rod 30 in the direction perpendicular to the advancing/retracting direction A. Therefore, by combining the output from the first MR sensor 51 and the output from the second MR sensor 52, the changes in the outputs corresponding to the displacement of the piston rod 30 in the direction perpendicular to the advancing/retracting direction A are cancelled out. As a result, even when the piston rod 30, on which the scales 60 are provided, is displaced, it is possible to suppress the detection error of the stroke of the piston rod 30.

In addition, the second edge portion 62a is inclined in the opposite direction from the first edge portion 61a with respect to the advancing/retracting direction A of the piston rod 30.

With this configuration, the outputs from the first MR sensor 51 and the second MR sensor 52 change in accordance with the stroke of the piston rod 30. Therefore, by combining the output from the first MR sensor 51 and the output from the second MR sensor 52, the changes in the outputs corresponding to the displacement of the piston rod 30 in the direction perpendicular to the advancing/retracting direction are cancelled out, and it is possible to detect the stroke of the piston rod 30 more precisely.

In addition, the first MR sensor 51 and the second MR sensor 52 are provided in a separated manner on the same place perpendicular to the advancing/retracting direction A of the piston rod 30.

With this configuration, the first MR sensor 51 and the second MR sensor 52 are arranged on the same place perpendicular to the advancing/retracting direction A of the piston rod 30 so as not to be separated in the advancing/retracting direction A of the piston rod 30. Therefore, both of the first MR sensor 51 and the second MR sensor 52 are affected by the displacement of the piston rod 30, which has occurred at the same position in the advancing/retracting direction A. As a result, even when the piston rod 30, on which the scales 60 are provided, is displaced, it is possible to suppress the detection error of the stroke of the piston rod 30.

In addition, the advancing/retracting direction A of the piston rod 30 in which the area of the scales 60 opposing to the first MR sensor 51 is gradually increased and the advancing/ retracting direction A of the piston rod 30 in which the area of the scales 60 opposing to the second MR sensor 52 is gradually increased are in the same direction, and the stroke of the piston rod 30 is detected on the basis of sum of the output from the first MR sensor 51 and the output from the second MR sensor 52.

With this configuration, when the piston rod 30 is displaced in the direction perpendicular to the advancing/retracting direction A, in accordance with the displacement of the piston rod 30, one of the output from the first MR sensor 51 and the output from the second MR sensor 52 is increased and the other is decreased or vice versa. Therefore, by combining the output from the first MR sensor 51 and the output from the second MR sensor 52, the changes in the outputs corresponding to the displacement are cancelled out. As a result, even when the piston rod 30, on which the scales 60 are provided, is displaced, it is possible to suppress the detection error of the stroke of the piston rod 30.

In addition, the piston rod 30 is a columnar member, and the scales 60 are constituted of the first scale 61 having the first edge portion 61a and the second scale 62 having the second edge portion 62a, and the first scale 61 and the second scale 62 are provided so as to oppose to each other with respect to the center axis of the piston rod 30.

With this configuration, when the piston rod 30 is decentered in the direction in which the first scale 61 approaches the first MR sensor 51, the second scale 62 moves away from the second MR sensor 52. Therefore, in accordance with the amount of decentering, one of the output from the first MR sensor 51 and the output from the second MR sensor 52 is increased and the other is decreased or vice versa. Thus, by combining the output from the first MR sensor 51 and the output from the second MR sensor 52, the changes in the outputs from the respective MR sensors 51 and 52 corresponding to the amount of decentering are cancelled out. As a result, even in a case in which, the piston rod 30 undergoes the stroke in a decentered state or is decentered while undergoing the stroke with respect to the cylinder tube 20, it is possible to detect the absolute stroke amount.

In addition, the advancing/retracting direction A of the piston rod 30 in which the area of the scales 60 opposing to the first MR sensor 51 is gradually increased and the advancing/retracting direction A of the piston rod 30 in which the area of the scales 60 opposing to the second MR sensor 52 is gradually increased are the opposite directions, and the stroke of the piston rod 30 is detected on the basis of the difference between the output from the first MR sensor 51 and the output from the second MR sensor 52.

With this configuration, when the piston rod 30 is displaced in the direction perpendicular to the advancing/retracting direction A, both of the output from the first MR sensor 51 and the output from the second MR sensor 52 are increased or decreased in the same manner in accordance with the displacement of the piston rod 30. Therefore, by subtracting the output from the second MR sensor 52 from the output from the first MR sensor 51, the changes in the outputs corresponding to the displacement are cancelled out. As a result, even when the piston rod 30, on which the scales 60 are provided, is displaced, it is possible to suppress the detection error of the stroke of the piston rod 30.

In addition, the piston rod 30 is a columnar member, and the scales 60 are constituted of the first scale 61 having the first edge portion 61a and the second scale 62 having the second edge portion 62a, and the first scale 61 and the second scale 62 are provided within a range of less than 90 degrees in the circumferential direction B of the piston rod 30.

With this configuration, when the piston rod 30 is decentered in the direction in which the first scale 61 approaches the first MR sensor 51, the second scale 62 also approaches the second MR sensor 52. Therefore, both of the output from the first MR sensor 51 and the output from the second MR sensor 52 are increased or decreased in accordance with the amount of decentering in a similar manner. Thus, by subtracting the output from the second MR sensor 52 from the output from the first MR sensor 51, the changes in the outputs from the respective MR sensors 51 and 52 corresponding to the amount of decentering are cancelled out. As a result, even in a case in which, the piston rod 30 undergoes the stroke in a decentered state or is decentered while undergoing the stroke with respect to the cylinder tube 20, it is possible to detect the absolute stroke amount.

In addition, the first scale 61 and the second scale 62 have a rectangular shape.

With this configuration, the first scale 61 and the second scale 62 are formed to have a geometrically simple rectangular shape. Therefore, processing of the first scale 61 and the second scale 62 can be simplified, and in turn, it is possible to reduce the manufacturing cost of the stroke detector 100.

In addition, the first scale 61 and the second scale 62 are respectively provided in plurality, and a plurality of the first MR sensors 51 are provided so as to oppose to the plurality of first scales 61, respectively, and a plurality of the second MR sensors 52 are provided so as to oppose to the plurality of second scales 62, respectively.

With this configuration, the outputs from the plurality of first MR sensors 51 and the outputs from the plurality of second MR sensors 52 are obtained. Therefore, by calculating the average value of the outputs from the respective MR sensors 51 and 52, it is possible to further suppress the detection error of the stroke.

In addition, the scales 60 are formed along the advancing/retracting direction A of the piston rod 30 by being divided into a plurality of parts.

In this configuration, it is possible to increase the changes in the outputs from the respective MR sensors 51 and 52 for a predetermined stroke as compared with the case in which the scales 60 are formed as stripes along the advancing/retracting direction A of the piston rod 30. Therefore, even when the stroke is relatively long, it is possible to improve the detection precision of the stroke.

Embodiments of the present invention were described above, but the above embodiments are merely examples of applications of the present invention, and the technical scope of the present invention is not limited to the specific constitutions of the above embodiments.

In this embodiment, although the scales are the scales 60 made of a non-magnetic body or magnetic body, the scales may have different permittivity from the piston rod 30. In this case, as a sensor for detecting the stroke, a coil that is provided so as to oppose to the scale is employed, and the impedance of the magnetized coil changes in accordance with the displacement of the piston rod 30.

This application claims priority based on Japanese Patent Application No. 2014-246822 filed with the Japan Patent Office on December 5, 2014, the entire contents of which are incorporated into this specification.

## Claims

1. A stroke detector comprising:
a first member;
a second member configured to advance and retract with respect to the first member;
a scale that is formed on a surface of the second member along an advancing/retracting direction of the second member; and
a first detecting element and a second detecting element that are provided on the first member so as to oppose to the scale, the first detecting element and the second detecting element being configured to change outputs therefrom in accordance with opposing area of the scale; wherein
the scale has a first edge portion that is inclined with respect to the advancing/retracting direction of the second member and a second edge portion that extends at a different angle from that of the first edge portion with respect to the advancing/retracting direction of the second member,
the first edge portion is formed so as to always oppose to the first detecting element within an advancing/retracting range of the second member, and the second edge portion is formed so as to always oppose to the second detecting element within the advancing/retracting range of the second member, and
a stroke of the second member is detected on the basis of output from the first detecting element and output from the second detecting element.

2. The stroke detector according to claim 1, wherein
the second edge portion is inclined in the opposite direction from the first edge portion with respect to the advancing/retracting direction of the second member.

3. The stroke detector according to claim 1, wherein
the first detecting element and the second detecting element are provided in a separated manner on a same place perpendicular to the advancing/retracting direction of the second member.

4. The stroke detector according to claim 1, wherein
the advancing/ retracting direction of the second member in which the area of the scale opposing to the first detecting element is gradually increased and the advancing/retracting direction of the second member in which the area of the scale opposing to the second detecting element is gradually increased are the same direction, and the stroke of the second member is detected on the basis of sum of the output from the first detecting element and the output from the second detecting element.

5. The stroke detector according to claim 4, wherein
the second member is a columnar member,
the scale is constituted of a first scale having the first edge portion and a second scale having the second edge portion, and
the first scale and the second scale are provided so as to oppose to each other with respect to a center axis of the second member.

6. The stroke detector according to claim 1, wherein
the advancing/retracting direction of the second member in which the area of the scale opposing to the first detecting element is gradually increased and the advancing/retracting direction of the second member in which the area of the scale opposing to the second detecting element is gradually increased are opposite directions, and the stroke of the second member is detected on the basis of difference between the output from the first detecting element and the output from the second detecting element.

7. The stroke detector according to claim 6, wherein
the second member is a columnar member,
the scale is constituted of a first scale having the first edge portion and a second scale having the second edge portion, and
the first scale and the second scale are provided within a range of less than 90 degrees in a circumferential direction of the second member.
